# EUROPEAN PATENT APPLICATION

(11) **EP 2 639 377 A2**
(43) Date of publication of application: **18.09.2013**
(21) Application number: 11839876.7
(22) Date of filing: 11.11.2011
(51) Int. Cl.: E04C 2/36, E04C 2/26, B32B 23/08

(54) **SANDWICH STRUCTURE WELDED BY HIGH-FREQUENCY INDUCTION HEATING, AND METHOD FOR MANUFACTURING SAME**

(30) Priority: 12.11.2010 KR 20100112692
(71) Applicant: LG Hausys, Ltd., Seoul 150-876 (KR)
(72) Inventor: JUNG, Gi-Hune, Daejeon 305-804 (KR); KIL, Yong-Kil, Cheongju-si Chungcheongbuk-do 361-727 (KR); KIM, Hee-June, Seongnam-si Gyeonggi-do 463-727 (KR)
(74) Representative: Vossius & Partner
(86) International application number: PCT/KR2011/008639
(87) International publication number: WO 2012/064156

(57) **Abstract**

According to one embodiment of the present invention, a sandwich structure welded by high-frequency induction heating comprises: a honeycomb core; a first skin sheet and a second skin sheet formed at either side of the honeycomb core, respectively; and conductors to be heated, which are arranged at one side of each of the first skin sheet and second skin sheet, and which melt the interfaces of the first skin sheet and second skin sheet by high-frequency induction heating so as to enable the first skin sheet and second skin sheet to be adhered to either side of the honeycomb core, respectively.

## Description

### [Technical Field]

Embodiments of the present invention relate to sandwich structures, and more particularly, to a sandwich structure welded through high frequency induction heating and a method of manufacturing the same.

### [Background Art]

In general, a sandwich structure includes two thin skin layers having high strength, a honeycomb core layer formed of a relatively light material, and adhesive layers for bonding the skin layers to the core layer.

As materials for the skin layers and the core layer, the skin layers must be made of a material having relatively excellent stiffness and strength to exhibit high resistance to tension and compression, and the core layer must be formed of a material having a relatively flexible and regular honeycomb shape to have high shear stress and light weight. When the layers are bonded by an adhesive to form a single structure, the structure has compression strength up to 30 times that of a sandwich panel formed only of a skin layer.

The core layer of the sandwich structure generally has a honeycomb structure and thus is also referred to as a honeycomb core. Although a honeycomb generally refers to a honeycomb shape, the honeycomb of the present invention is not limited thereto and will be used herein as a concept including all of a lattice shape, wave shape, convex shape, and concave shape. When a honeycomb core is applied to the sandwich structure, the sandwich structure is light and exhibits excellent compression strength. The sandwich structure including the honeycomb core have been used as a part of an air plane or a transportation structure since 1940, and is currently widely applied to interior structures of buildings, ships or vehicles, partition walls, and light weight structures in the fields of leisure and sports.

### [Disclosure]

### [Technical Problem]

An aspect of the present invention is to provide a sandwich structure welded through high frequency heating, which is formed by heating interfacial surfaces of skin sheets with high frequency and bonding the skin sheets to opposite sides of a honeycomb core such that the sandwich structure is not restricted by a thickness of skin sheets, and a method of manufacturing the same.

Another aspect of the present invention is to provide a sandwich structure welded through high frequency heating, in which skin sheets and a honeycomb core are welded to each other by high frequency induction heating instead of using adhesives, preventing problems associated with volatilized adhesive solvents generated in the course of welding, and a method of manufacturing the same.

The technical aspects of the present invention are not limited to these aspect and other aspects of the present invention will become apparent to those skilled in the art from the following description.

### [Technical Solution]

In accordance with one aspect, the present invention provides a sandwich structure welded through high frequency induction heating, which includes: a honeycomb core; first and second skin sheets formed on opposite sides of the honeycomb core, respectively; and conductive materials disposed on surfaces of the first and second skin sheets to be heated by high frequency induction heating and melt interfacial surfaces of the first and second skin sheets to bond the first and second skin sheets to the opposite sides of the honeycomb core.

The first and second skin sheets may be fed to a heating zone including a heating coil by a conveyor belt; the interfacial surfaces of the first and second skin sheets facing the honeycomb core may be melted through high frequency induction heating between the heating coil and the conductive materials; and the first and second skin sheets may be pressed by a roll with the honeycomb core interposed between the first and second skin sheets and naturally cooled to be welded to the honeycomb core.

The heating coil may be formed of a copper tube through which cooling water flows.

The heating coil may receive a high frequency current of 27±5 kHz from an AC power source for high frequency induction heating.

The conductive materials may have a steel mesh shape to be secured to one of the surfaces of the first and second skin sheets in manufacture of the first and second skin sheets.

The conductive materials may be formed of at least one material selected from among aluminum (A1), copper (Cu), stainless steel (SUS), and carbon steel (CS).

The honeycomb core may be formed of a thermoplastic resin to be melted by heat.

The first and second skin sheets may be formed of a thermoplastic composite material reinforced by continuous fibers.

In accordance with another aspect, the present invention provides a method of manufacturing a sandwich structure welded through high frequency induction heating, which includes: forming conductive materials on surfaces of first and second skin sheets, respectively; feeding the first and second skin sheets to a heating zone including a heating coil using a conveyor belt; supplying high frequency current to the heating coil to melt interfacial surfaces of the first and second skin sheets through induction heating of the conductive materials; and pressing and cooling the first and second skin sheets, with a honeycomb core interposed between the first and second skin sheets.

The forming conductive materials may include forming conductive materials in a steel mesh shape on one of the surfaces of the first and second skin sheets when manufacturing the first and second skin sheets.

The supplying high frequency current to the heating coil may include supplying a high frequency current of 27±5 kHz from an AC power source to the heating coil.

The heating coil may be formed of a copper tube through which cooling water can flow.

The conductive materials may be formed of at least one material selected from aluminum (Al), copper (Cu), stainless steel (SUS), and carbon steel (CS).

The honeycomb core may be formed of a thermoplastic resin to be melted by heat.

The first and second skin sheets may be formed of a thermoplastic composite material reinforced by continuous fibers.

The pressing may be performed by a rubber roll.

Details of other embodiments of the present invention are included in the detailed description and the accompanying drawings.

The above and other aspects, features, and advantages of the invention will become apparent from the detailed description of the following embodiments in conjunction with the accompanying drawings. It should be understood that the present invention is not limited to the following embodiments and may be embodied in different ways, and that the embodiments are provided for complete disclosure and thorough understanding of the invention to those skilled in the art. The scope of the invention is defined only by the claims. Like components will be denoted by like reference numerals throughout the specification.

### [Advantageous Effects]

According to one embodiment, a sandwich structure may be formed so as not to be restricted by a thickness of skin sheets by heating interfacial surfaces of the skin sheets through high frequency induction heating and bonding the skin sheets to opposite sides of a honeycomb core.

According to one embodiment, skin sheets and a honeycomb core are welded to each other to form a sandwich structure through high frequency heating instead of adhesives, thereby preventing a work site from being exposed to a toxic environment due to a solvent used in a welding process employing adhesives.

### [Description of Drawings]

Fig. 1 is an exploded perspective view of a sandwich structure welded through high frequency induction heating according to one embodiment of the present invention.
Fig. 2 is an assembled perspective view of the sandwich structure according to the embodiment of the present invention.
Fig. 3 is a side sectional view of the sandwich structure according to the embodiment of the present invention.
Fig. 4 is a flow diagram of a method of manufacturing a sandwich structure welded through high frequency induction heating according to one embodiment of the present invention.
Fig. 5 is a flowchart of the method of manufacturing a sandwich structure welded through high frequency induction heating according to the embodiment of the present invention.

### [Best Mode]

A sandwich structure having a honeycomb core can exhibit excellent bending characteristics, as compared with a weight thereof. A structural analysis result shown in Table 1 represents various influences.
[Table1] Skin sheet 20 20 20 20 20 20 5 Gpa 5 Gpa 5 Gpa Gpa Gpa Gpa Gpa Gpa Gpa 1 t 2 t 3 t 1 t 2 t 3 t 1 t 2 t 3 t Honeycomb 1 Gpa 1 Gpa 1 Gpa 5 Gpa 5 Gpa 5 Gpa 5 Gpa 5 Gpa 5 Gpa core 10 t 8 t 6 t 10 t 8 t 6 t 10 t 8 t 6 t Deformation 7.89 5.27 4.31 5.24 3.55 2.87 11.79 9.61 8.45 (mm)

Boundary conditions for structure analysis are as follows. In a bending condition, a sample has a size of 180 mm*90 mm*12 mm, a load of 1.0 MPa is applied to an upper plate, and opposite ends of the sample in the 180 mm direction are constrained. Skin sheets are applied to opposite sides of the sample to have the same thickness and an overall thickness of the sandwich structure is secured at 12 mm.

For a honeycomb core, pure propylene (PP) having a strength of 1 GPa and polypropylene (PP) reinforced by long glass fibers and having a strength of 5 Gpa are employed, and for a skin sheet, polypropylene (PP) reinforced by long glass fibers and having a strength of 5 GPa, and polypropylene (PP) reinforced by continuous glass fibers and having a strength of 20 GPa are employer. Of course, it can be seen that deformation of the honeycomb core and the skin sheet decreases with increasing strength thereof and with increasing thickness of the skin sheet.

As used in the art, a method of heating and pressing a skin sheet to melt and bond the skin sheet to manufacture a sandwich structure has a limit in that a sufficient amount of heat cannot be transferred to an interface when the skin sheet is thick, thereby providing uneven interfacial bonding force or causing defects.

On the other hand, a method of using adhesives does not have a limit in terms of thickness, but entails work site contamination due to application of the adhesive and a solvent.

Thus, as an attempt to overcome such limitations, one embodiment of the present invention provides a sandwich structure, in which skin sheets and a honeycomb core are welded to each other by heating interfacial surfaces therebetween through high frequency induction heating.

In more detail, in this embodiment of the invention, the skin sheets and the honeycomb core may be welded by inserting or securing conductive materials such as a steel mesh between the skin sheets and the honeycomb core and heating the steel meshes through high frequency induction heating.

High frequency induction heating refers to a process of spirally winding a copper tube (heating coil), through which cooling water can flow, around a material to be heated, and applying high frequency current (for example, 27 kHz) to the heating coil to heat the material, which is a conductive material, using the induced current.

The conductive materials may be aluminum (Al), copper (Cu), stainless steel (SUS), carbon steel (CS), and more preferably, a magnetically permeable material. High frequency induction heating is based on an energy loss principle by Joule heating and magnetic hysteresis.

In the embodiment of the present invention, high frequency heating provides a surface effect in which a penetration depth decreases with increasing frequency of electric current, and thus it is necessary to select a suitable frequency. In one embodiment of the present invention, a frequency of 27±5 kHz may be selected.

According to the embodiment of the present invention, a sandwich structure in which a thickness of skin sheets is not limited may be manufactured by heating interfacial surfaces of the skin sheets through high frequency induction heating.

Further, according to the embodiment of the present invention, since the skin sheets and the honeycomb core are welded by high frequency induction heating instead of using adhesives, problems associated with volatilized adhesive solvents generated in the course of welding can be eliminated.

Hereinafter, exemplary embodiments of the present invention will be described in detail with reference to the accompanying drawings.

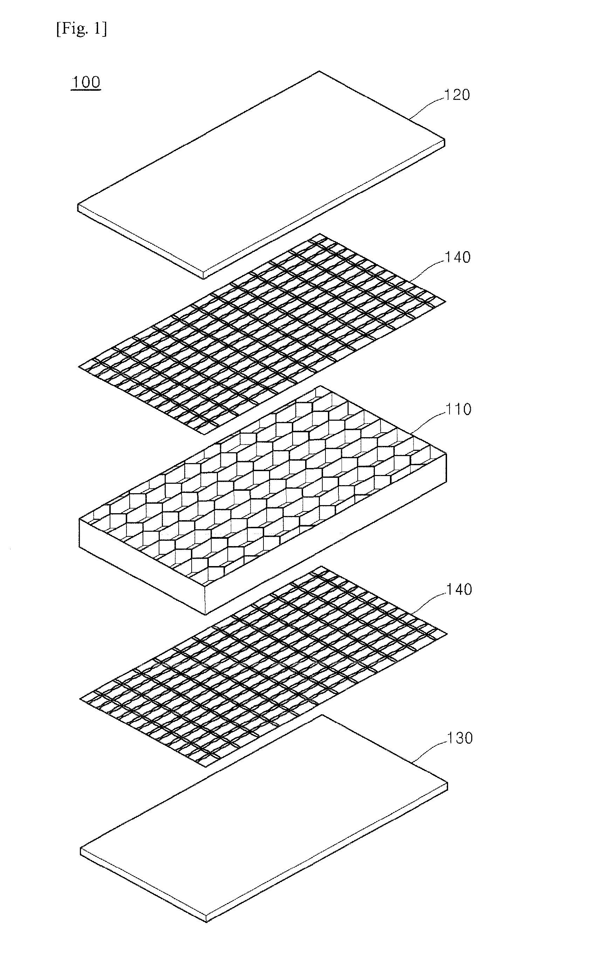

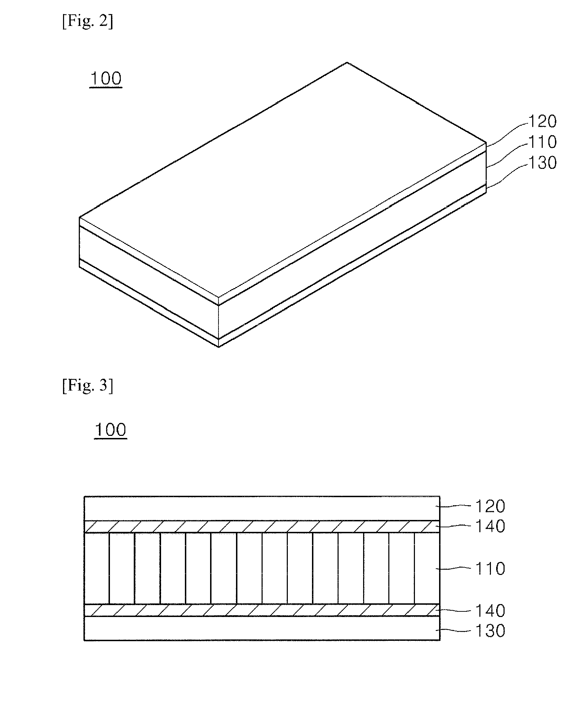

Fig. 1 is an exploded perspective view of a sandwich structure welded through high frequency induction heating according to one embodiment of the present invention. Fig. 2 is an assembled perspective view of the sandwich structure according to the embodiment of the present invention. Fig. 3 is a side sectional view of the sandwich structure according to the embodiment of the present invention.

Referring to Figs. 1 to 3, a sandwich structure 100 welded through high frequency induction heating according to one embodiment of the present invention includes a honeycomb core 110, first and second skin sheets 120, 130, and conductive materials 140.

The honeycomb core 110 may have a hexagonal honeycomb structure and may be formed of a thermoplastic resin (for example, PPT) such that the honeycomb core 110 can be melted.

The honeycomb core 110 uniformly distributes external force and exhibits excellent strength. Cells of the honeycomb core 110 are enclosed by the first and second skin sheets 120, 130, so that internal pressure of the honeycomb core 110 can remain very high even when pressure is applied thereto from the outside, whereby the honeycomb core 110 can be used as an interior material for buildings. In particular, since the honeycomb core 110 has sufficient strength even with a small thickness, the honeycomb core is applicable to various fields.

The first skin sheet 120 is formed of a thermoplastic composite material reinforced by continuous fibers, and is disposed on an upper surface of the honeycomb core 110. One or more first skin sheets 120 may be formed, but the number of the first skin sheets 120 is not limited thereto.

Like the first skin sheet 120, the second skin sheet 130 is formed of a thermoplastic composite material reinforced by continuous fibers, and is disposed on a lower surface of the honeycomb core 110. One or more second skin sheets 130 may be formed, but the number of the second skin sheets 130 is not limited thereto.

The conductive materials 140 are formed on one surface of each of the first and second skin sheets 120, 130. The conductive materials 140 are formed in a steel mesh shape and are secured to one of the surfaces of the first and second skin sheets 120, 130 upon manufacture of the first and second skin sheets 120, 130. The steel mesh enables ductile fracture, thereby delaying complete fracture.

The conductive materials 140 may be formed of a material, such as aluminum (A1), copper (Cu), stainless steel (SUS), and carbon steel (CS), and preferably, a magnetically permeable material.

Upon high frequency induction heating, the conductive materials 140 melt interfacial surfaces of the first and second skin sheets 120, 130, thereby allowing the first and second skin sheets 120, 130 to be bonded to opposite sides of the honeycomb core 110.

To this end, first, the first and second skin sheets 120, 130 having the conductive materials 140 thereon are fed to a heating zone by a conveyor belt. Then, the conductive materials 140 emit heat upon high frequency induction heating in association with the heating coil in the heating zone, and melt the interfacial surfaces of the first and second skin sheets 120, 130 with the heat. Then, the honeycomb core 110 is interposed between the first and second skin sheets 120, 130 and is pressed by a rubber roll, followed by natural cooling. Thus, the first and second skin sheets 120, 130 are welded to the honeycomb core 110.

Here, the heating coil may be formed of a copper tube through which cooling water can flow. Further, high frequency current (for example, 27 kHz) is supplied from an AC power source to the heating coil for high frequency induction heating.

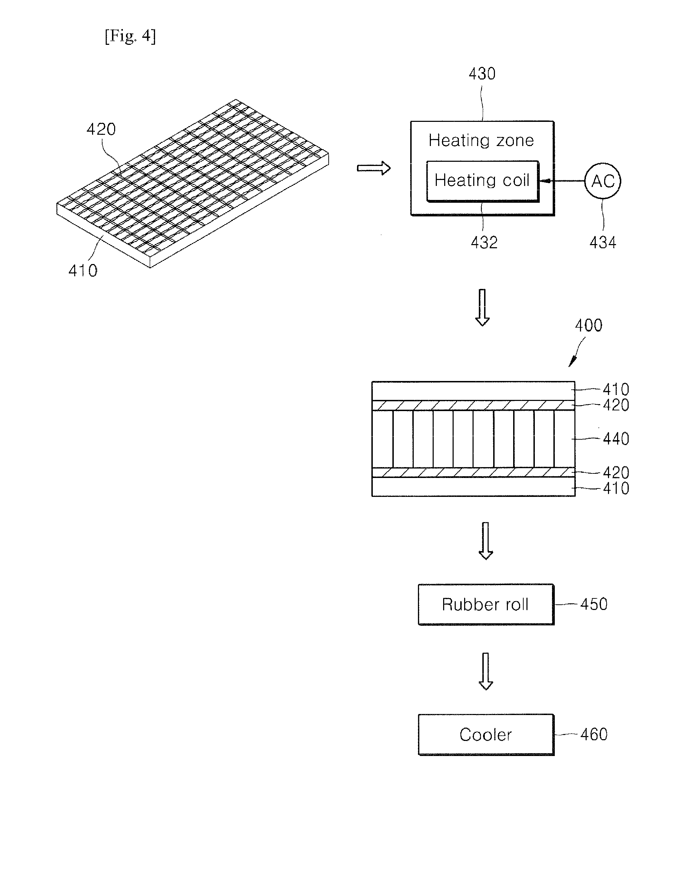

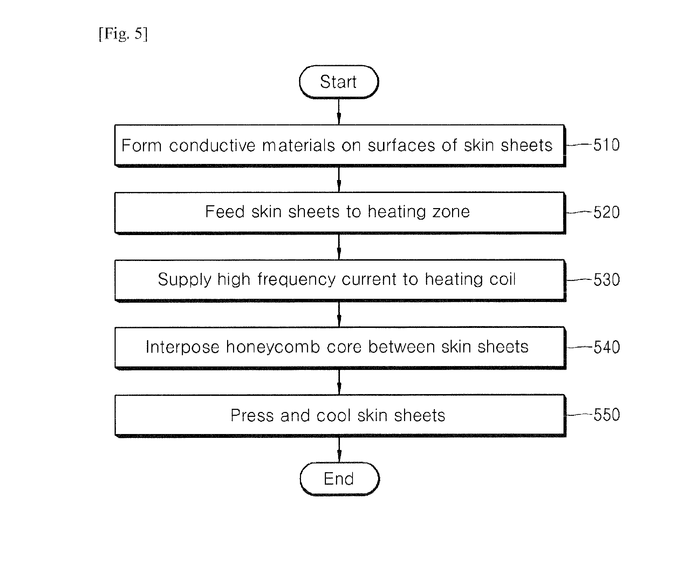

Fig. 4 is a flow diagram of a method of manufacturing a sandwich structure welded through high frequency induction heating according to one embodiment of the present invention, and Fig. 5 is a flowchart of the method of manufacturing a sandwich structure welded through high frequency induction heating according to the embodiment of the present invention.

Referring to Figs. 4 and 5, in operation 510, a conductive material 420 is formed on one surface of a skin sheet 410. Here, the conductive material 420 may be formed in a steel mesh shape on one surface of the skin sheet 410 when the skin sheets 410 are manufactured.

Next, in operation 520, the skin sheet 410 is fed to a heating zone 430 including a heating coil 432 by a conveyor belt.

Next, in operation 530, an interfacial surface of the skin sheet 410 is melted by supplying high frequency current (for example, 27 kHz) to the heating coil 432 from an AC power source 434 for induction heating of the conductive materials 420.

Next, in operation 540, two skin sheets 410 are prepared, and a honeycomb core 440 is interposed therebetween to manufacture a sandwich structure 400.

Next, in operation 550, the sandwich structure 400 is pressed by a rubber roll 450 and is naturally cooled by a cooler 460.

In this way, according to the embodiment of the invention, a sandwich structure which is not restricted by a thickness of skin sheets can be manufactured by heating interfacial surfaces of skin sheets via high frequency induction heating and bonding the skin sheets to opposite sides of a honeycomb core, respectively.

Further, according to the embodiment of the present invention, problems associated with volatilized adhesive solvents generated in the course of welding can be prevented by welding the skin sheets and the honeycomb core via high frequency induction heating instead of using adhesives.

Although some embodiments of the present invention have been described in detail until now, various modifications can be made without departing from the scope of the present invention. Thus, the scope of the present invention should not be limited to the embodiments, but should be determined by the following claims and equivalents thereof.

Although the embodiments have been described with reference to the accompanying drawings, it will be understood by those skilled in the art that these embodiments are provided for illustration only, and various modifications, changes, alterations and equivalent embodiments can be made without departing from the scope of the present invention. Therefore, the scope and sprit of the present invention should be defined only by the accompanying claims and equivalents thereof.

## Claims

1. A sandwich structure welded through high frequency induction heating, comprising:
a honeycomb core;
first and second skin sheets formed on opposite sides of the honeycomb core, respectively; and
conductive materials disposed on surfaces of the first and second skin sheets to be heated by high frequency induction heating and melt interfacial surfaces of the first and second skin sheets to bond the first and second skin sheets to the opposite sides of the honeycomb core.

2. The sandwich structure according to claim 1, wherein the first and second skin sheets are fed to a heating zone including a heating coil by a conveyor belt, the interfacial surfaces of the first and second skin sheets facing the honeycomb core are melted through high frequency induction heating between the heating coil and the conductive materials, and the first and second skin sheets are pressed by a roll with the honeycomb core interposed between the first and second skin sheets and naturally cooled to be welded to the honeycomb core.

3. The sandwich structure according to claim 2, wherein the heating coil is formed of a copper tube through which cooling water flows.

4. The sandwich structure according to claim 2, wherein the heating coil receives a high frequency current of 27±5 kHz from an AC power source for high frequency induction heating.

5. The sandwich structure according to claim 1, wherein the conductive materials have a steel mesh shape to be secured to one of the surfaces of the first and second skin sheets in manufacture of the first and second skin sheets.

6. The sandwich structure according to claim 1, wherein the conductive materials are formed of at least one material selected from among aluminum (A1), copper (Cu), stainless steel (SUS), and carbon steel (CS).

7. The sandwich structure according to claim 1, wherein the honeycomb core is formed of a thermoplastic resin to be melted by heat.

8. The sandwich structure according to claim 1, wherein the first and second skin sheets are formed of a thermoplastic composite material reinforced by continuous fibers.

9. A method of manufacturing a sandwich structure welded through high frequency induction heating, comprising:
forming conductive materials on surfaces of first and second skin sheets, respectively;
feeding the first and second skin sheets to a heating zone including a heating coil using a conveyor belt;
supplying high frequency current to the heating coil to melt interfacial surfaces of the first and second skin sheets through induction heating of the conductive materials; and
pressing and cooling the first and second skin sheets with a honeycomb core interposed between the first and second skin sheets.

10. The method according to claim 9, wherein the forming conductive materials comprises forming conductive materials in a steel mesh shape on one of the surfaces of the first and second skin sheets when manufacturing the first and second skin sheets.

11. The method according to claim 9, wherein the supplying high frequency current to the heating coil comprises supplying a high frequency current of 27±5 kHz from an AC power source to the heating coil.

12. The method according to claim 9, wherein the heating coil is formed of a copper tube through which cooling water can flow.

13. The method according to claim 9, wherein the conductive materials is formed of at least one material selected from among aluminum (A1), copper (Cu), stainless steel (SUS), and carbon steel (CS).

14. The method according to claim 9, wherein the honeycomb core is formed of a thermoplastic resin to be melted by heat.

15. The method according to claim 9 wherein the first and second skin sheets are formed of a thermoplastic composite material reinforced by continuous fibers.

16. The method according to claim 9, wherein the pressing is performed using a rubber roll.
